(19) Europäisches Patentamt
European Patent Office
Office européen des brevets

(11) **EP 0 846 617 B1**

(12) **EUROPÄISCHE PATENTSCHRIFT**

(45) Veröffentlichungstag und Bekanntmachung des Hinweises auf die Patenterteilung:
**23.04.2003   Patentblatt 2003/17**

(51) Int Cl.⁷: **B64C 21/10**

(21) Anmeldenummer: **97120247.8**

(22) Anmeldetag: **19.11.1997**

(54) **Oberfläche für eine von einer eine Strömungshauptrichtung aufweisenden Strömung turbulent umströmten Wand**

Surface device provided for a wall in contact with a flowing fluid being turbulent in the main fluid flow direction

Elément de surface disposé sur une paroi parcourue par un fluide présentant un écoulement turbulent dans la direction principale d'écoulement.

(84) Benannte Vertragsstaaten:
**FR GB**

(30) Priorität: **05.12.1996  DE 19650439**

(43) Veröffentlichungstag der Anmeldung:
**10.06.1998   Patentblatt 1998/24**

(73) Patentinhaber: **Deutsches Zentrum für Luft- und Raumfahrt e.V**
**53127 Bonn (DE)**

(72) Erfinder: **Bechert, Dietrich W., Dr.**
**10625 Berlin (DE)**

(74) Vertreter: **Patentanwälte Rehberg + Hüppe**
**Postfach 31 62**
**37021 Göttingen (DE)**

(56) Entgegenhaltungen:
**EP-A- 0 205 289            EP-A- 0 411 351**
**DE-A- 3 534 293            US-A- 4 706 910**

• **M. BRUSE, D.W. BECHERT, J.G.T. VAN DER HOEVEN, W. HAGE, G. HOPPE: "Experiments with conventional and withnovel adjustable drag-reducing surfaces" PROCEEDINGS OF THE INTERNATIONAL CONFERENCE ON NEAR-WALL TURBULENT FLOWS, 15. - 17. März 1993, Seiten 719-738, XP002118583 Tempe,Arizona,USA**

**Beschreibung**

Die Erfindung bezieht sich auf eine von einer eine Strömungshauptrichtung aufweisenden Strömung turbulent umströmte Wand mit den Merkmalen des Oberbegriffs des Anspruchs 1.

Wände mit den Merkmalen des Oberbegriffs des Anspruchs 1 dienen dazu, den turbulenten Impulsaustausch zwischen der Strömung und der Wand an der Oberfläche zu behindern. Soweit dies erreicht wird, tritt eine Verminderung der Wandreibung auf.

Eine Wand mit den Merkmalen des Oberbegriffs des Anspruchs 1 wird in M. Bruse, D. W. Bechert, J. G. T. van der Hoeven, W. Hage und G. Hoppe: Experiments with conventional and with novel adjustable drag-reducing surfaces, Int. Conf. on Near-Wall Turbulent Flows, Tempe, AZ, USA, 15. bis 18. März 1993, Proceedings published by ELSEVIER, Amsterdam beschrieben. Hier sind die Rippen im Querschnitt linienförmig ausgebildet. Bei einer Höhe der Rippen von 50 % des seitlichen Rippenabstands wird bei einem an die jeweilige Strömung optimal angepaßten seitlichen Rippenabstand eine Verminderung der Wandreibung von bis zu 10 % erreicht. Allerdings ist diese bekannte Oberfläche für die praktische Anwendung beispielsweise bei einem Flugzeug ungeeignet, da die im Querschnitt linienförmigen Rippen schwer herzustellen sind und keine ausreichende Stabilität aufweisen.

Aus der EP 0 205 289 A 1 sind verschiedene von einer eine Strömungshauptrichtung aufweisenden Strömung turbulent umströmte Wände bekannt. In jedem Fall weisen die Wände an ihrer Oberfläche eine Vielzahl von direkt aneinander angrenzenden Rippen auf, die in der Strömungshauptrichtung angeordnet sind. Bei einer keilförmigen Ausbildung der Rippen, wie sie in der älteren Europäischen Patentanmeldung beschrieben ist, sind der seitliche Rippenabstand und die Höhe der Rippen gleich groß. In der EP 0 205 289 A 1 wird zwar behauptet, mit den dort beschriebenen Oberflächen könnte eine Verminderung der Wandreibung bis zu 10 % und mehr erreicht werden. Diese Aussage hält einer Überprüfung jedoch nicht stand.

Wandreibungsmessungen waren über lange Zeit nur mit einer Meßgenauigkeit in der Größenordnung von +/- 2 % möglich. Erst seit dem Bau einer speziellen Versuchsanlage, dem Berliner Ölkanal, können Messgenauigkeiten von +/- 0,3 % erreicht werden [D. W. Bechert, G. Hoppe, J. G. T. van der Hoeven und R. Makris: The Berlin oil channel for drag reduction research, Exp. in Fluids 12, 251 bis 260 (1992)]. Durch die Verwendung von Öl als Fluid für die Strömung können die Messungen an vergrößerten Rippen durchgeführt werden. Dies erleichtert die Herstellung reproduzierbarer Testoberflächen. Weiterhin wurde die Meßgenauigkeit der Wandreibungsmessungen durch einen Wandreibungs-Kraftvergleich mit einer glatten Referenzplatte gegenüber absoluten Wandreibungsmessungen modifiziert. Eine Überprüfung der aus der EP 0 205 289 A 1 bekannten Oberfläche mit keilförmigen Rippen ergab eine maximale Verminderung der Wandreibung von etwa 5 %. Die in der älteren Europäischen Patentanmeldung erwähnte Verminderung der Wandreibung um 10 und mehr Prozent konnte hingegen nicht bestätigt werden.

Der Erfindung liegt die Aufgabe zugrunde, eine Wand mit den Merkmalen des Oberbegriffs des Anspruchs 1 aufzuzeigen, die unter den Randbedingungen einer leichten Herstellbarkeit und einer guten Stabilität der Rippen eine maximale Verminderung der Wandreibung ergibt.

Erfindungsgemäß wird diese Aufgabe durch die Merkmale des Anspruchs 1 gelöst. Vorteilhafte Ausführungsformen der Wand sind in den Unteransprüchen 2 bis 5 beschrieben.

Von der bekannten Anordnung der bekannten linienförmigen Rippen greift die Erfindung den deutlichen seitlichen Rippenabstand auf. Die Keilform mit einem Keilwinkel in dem angegebenen Bereich ist zwar an die aus der EP 0 205 289 A 1 bekannten Rippen angelehnt, dort ist der Keilwinkel aber signifikant größer und bei Rippen ohne seitlichen Rippenabstand vorgesehen. Mit der Erfindung kann die Wandreibung im Vergleich zu einer glatten Oberfläche um deutlich mehr als 7 % verringert werden und dies bei gegebener Dimensionierung der Rippen über einen vergleichsweise großen Bereich der Geschwindigkeit der die Wand turbulent überströmenden Strömung. Bei Anpassung der Wand an eine Strömung bestimmter Geschwindigkeit können bis zu 8,5 % Wandreibungsverminderung erreicht werden.

Der normierte seitliche Rippenabstand $s^+$, welcher sich gemäß

$$s^+ = (s \,/\, ny) * \sqrt{(tau_0 \,/\, rho)}$$

berechnet, wobei s der seitliche Rippenabstand, $tau_0$ die Wandschubspannung einer glatten Referenzoberfläche, die der gleichen Strömung ausgesetzt ist, rho die Dichte des Fluids und ny die kinematische Zähigkeit des Fluids ist, beträgt vorzugsweise zwischen 12 und 22. Der optimale Bereich liegt bei 16 bis 18, das heißt bei einem $s^+$-Wert von cirka 17. Es versteht sich, daß der normierte Rippenabstand $s^+$ an die normalerweise auftretende Strömungsgeschwindigkeit der die Wand überströmenden Strömung anzupassen ist. Dies bedeutet beispielsweise für eine Oberfläche eines Fahr- oder Flugzeugs, daß der normierte Rippenabstand $s^+$ auf die Reisegeschwindigkeit des Fahr oder Flugzeugs abzustimmen ist. Der sich so ergebende reale Rippenabstand s beträgt typischerweise 0,04 bis 0,10 mm. Das heißt, die Oberfläche weist durch die Rippen eine feine, geradezu mikroskopische Struktur auf.

Bei der Erfindung ist es nicht zwingend, daß die Rippen und die dazwischen befindlichen Oberflächenbereiche im Querschnitt jeweils durch Geradenabschnitte begrenzt werden. Die Oberfläche kann auch in gewissem Umfang abgerundet sein, um ihre Herstellbarkeit und ihre Stabilität noch weiter zu erleichtern. Dabei sollten aber die seitlichen Ansätze der Rippen einen Krümmungsradius von maximal 20 % des seitlichen Rippenabstands nicht überschreiten. Die Oberfläche zwischen den Rippen darf keinen kleineren Krümmungsradius als das doppelte des seitlichen Rippenabstands aufweisen.

Unter dem Rippenabstand wird hier konkret das seitliche Rastermaß der Rippen verstanden und nicht der Freiraum zwischen zwei benachbarten Rippen. Bei der Erfindung ist ein solcher Freiraum jedoch immer vorhanden.

Die Erfindung wird im folgenden anhand von Ausführungsbeispielen näher erläutert und beschrieben. Dabei zeigt:

Figur 1     eine von einer Strömung turbulent überströmte Wand im Längsschnitt längs der Strömungshauptrichtung der Strömung,

Figur 2     zwei Ausführungsformen der Oberfläche der turbulent überströmten Wand im Querschnitt quer zu der Strömungshauptrichtung gemäß Figur 1,

Figur 3     eine Auftragung zu der Verminderung der Wandreibung durch die Oberfläche gemäß Figur 2,

Figur 4     eine Figur 2 entsprechende Darstellung von zwei nichterfindungsgemäßen Oberflächen, zu denen Vergleichswerte in der Auftragung gemäß Figur 3 wiedergegeben sind, und

Figur 5     eine gegenüber Figur 2 b abgewandelte erfindungsgemäße Oberfläche in einer noch weiter vergrößerten Darstellung.

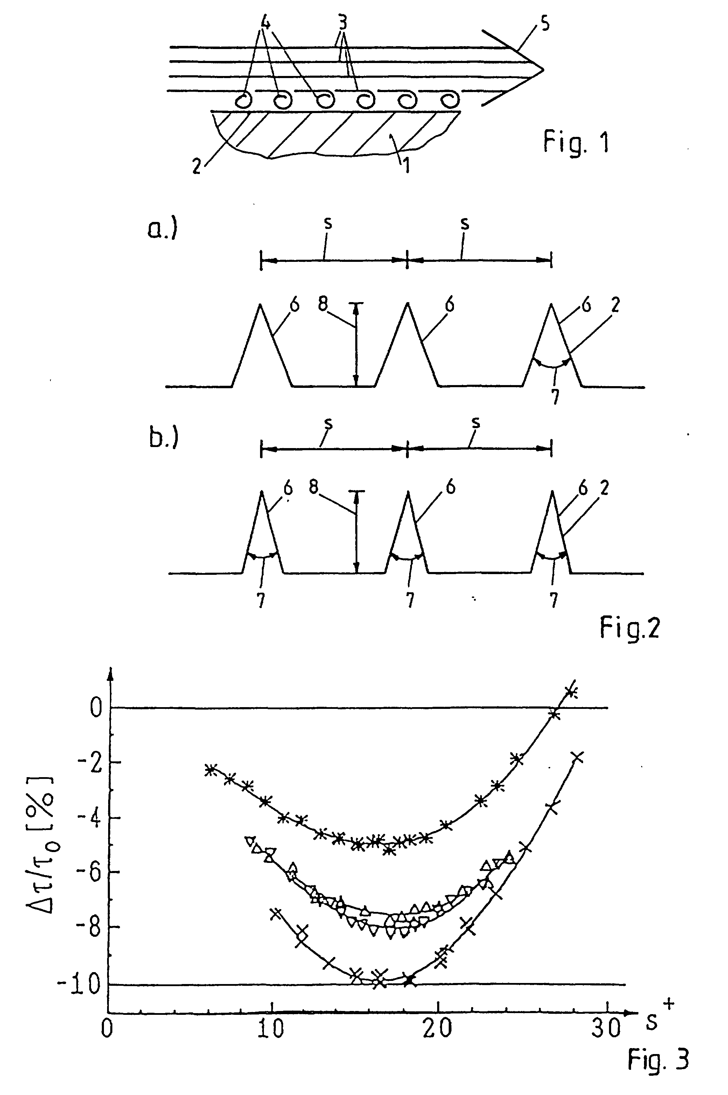

In Figur 1 ist eine Wand 1 mit einer Oberfläche 2 schematisiert wiedergegeben. Die Wand 1 wird von einer Strömung 3 turbulent überströmt. Die Strömung 3 ist anhand von Strömungslinien dargestellt. An der Oberfläche 2 bildet die Strömung 3 Wirbel 4 aus, die die überströmung der Wand 1 als turbulent qualifizieren. Abgesehen von den Wirbeln 4 bewegt sich die Strömung 3 in einer durch eine Pfeilspitze angedeuteten Strömungshauptrichtung 5.

Die Oberfläche 2 der Wand 1 weist eine Struktur auf, die jedoch beispielsweise in Abstimmung auf die Überströmung eines Verkehrsflugzeugs sehr fein ist. Diese Struktur der Oberfläche 2 ist in Figur 2 in Form von zwei exemplarischen Beispielen vergrößert dargestellt. Die Oberfläche 2 weist mehrere jeweils nebeneinander und in der Strömungshauptrichtung 5 gemäß Figur 1 ausgerichtete Rippen 6 auf. Die Rippen 6 weisen untereinander einen seitlichen Rippenabstand s auf. dabei sind die Rippen 6 jeweils keilförmig ausgebildet mit einem Keilwinkel 7. Gemäß Figur 2 a.) beträgt dieser Keilwinkel 7 45 °, gemäß Figur 2 b.) 30 °. Die Höhe 8 der Rippen 6 beträgt s/2. Querschnitte durch die Oberfläche 2 setzen sich im wesentlichen aus Geradenabschnitten zusammen. Diese Geradenabschnitte begrenzen zum einen die Rippen 6 und bilden zum anderen die Oberflächenbereiche zwischen den Rippen 6 aus.

Die mit der Oberfläche 2 in den Ausführungsformen gemäß Figur 2 a.) und b.) erreichbaren Verminderungen der Wandreibung im Vergleich zu einer glatten Referenzoberfläche sind in Figur 3 dargestellt. Hier ist die relative Wandreibungsverminderung Delta tau / $tau_0$ in Prozent über einem normierten seitlichen Rippenabstand $s^+$ aufgetragen. Der normierte seitliche Rippenabstand $s^+$ berechnet sich gemäß

$$s^+ = (s \, / \, ny) * \sqrt{(tau_0 \, / \, rho)}$$

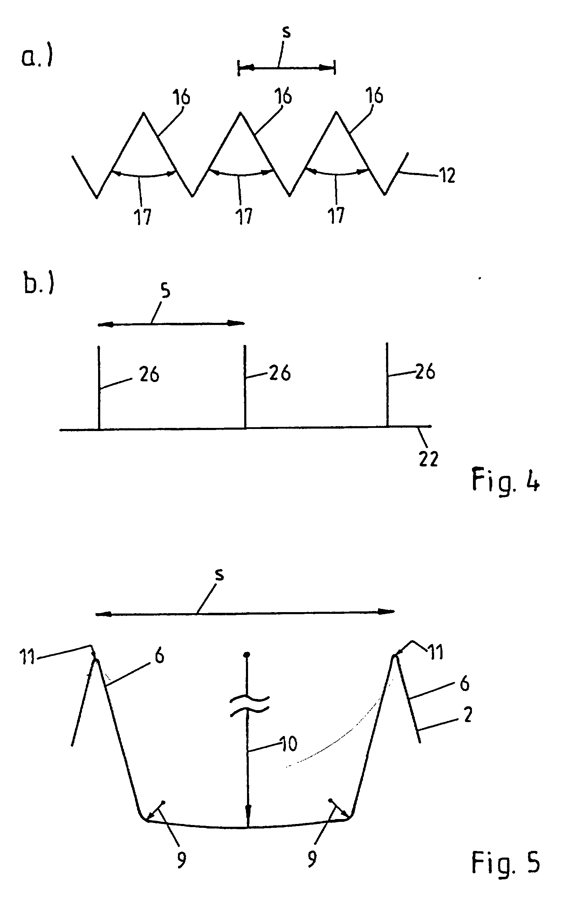

aus dem tatsächlichen seitlichen Rippenabstand s, der Wandschubspannung $tau_0$ der glatten Referenzoberfläche, die der gleichen Strömung ausgesetzt ist, der Dichte rho des jeweiligen Fluids und der kinematischen Zähigkeit ny dieses Fluids. Die Normierung des seitlichen Rippenabstands auf $s^+$ ergibt eine Art Reynoldszahl und ist etwa proportional der Strömungsgeschwindigkeit der die Wand überströmenden Strömung. Die beiden Kurven in der Mitte von Figur 3 betreffend die Oberflächen 2 gemäß Figur 2 a.) und 2 b.), wobei die obere mittlere Kurve mit den aufrechten Dreiecken der Oberfläche gemäß Figur 2 a.) zugeordnet ist und die untere mittlere Kurve mit den auf dem Kopf stehenden Dreiecken zu der Oberfläche gemäß Figur 2 b.) gehört. Aus Figur 3 ist ersichtlich, daß mit diesen beiden Oberflächen über einen weiten Bereich von $s^+$, das heißt über einen weiten Bereich von Strömungsgeschwindigkeiten eine Verminderung der Wandreibung gegenüber einer glatten Referenzoberfläche von 7 % und mehr erreichbar ist. Demgegenüber wird von der obersten Kurve mit den Sternen nur eine maximale Wandreibungsverminderung von 5 % erreicht. Die oberste Kurve gemäß Figur 3 entspricht der in Figur 4 a.) dargestellten Oberfläche 12 mit direkt aneinander angrenzenden, keilförmigen Rippen 16 die einen Keilwinkel 17 von etwa 60 ° aufweisen. Diese Oberfläche 12 entspricht der EP 0 205 289 A 1. Mit dieser Oberfläche 12 werden die dort behaupteten Wandreibungsverminderungen von 10 % und mehr tatsächlich nicht erreicht.

Solche Wandreibungsverminderungen sind nur mit der in Figur 4 b.) angedeuteten Oberfläche 22 erreichbar, die einzelne, linienförmige Rippen 26 aufweist. Zu der Oberfläche gemäß Figur 4 b.) gehört die Kurve ganz unten in Figur 3, bei der die einzelnen Meßpunkte jeweils durch ein x wiedergegeben sind. Die dargestellten Wandreibungsverminderungen von bis zu 10 % sind aber leider nur theoretisch, da die Oberfläche 22 gemäß Figur 4 b.) in Abstimmung auf relevante Strömungsgeschwindigkeiten in tatsächlichen Fluida nicht herstellbar ist und bei gegebener Herstellbarkeit keine ausreichende Stabilität der Rippen 26 aufweisen würde.

Die erfindungsgemäße Oberfläche 2 gemäß Figur 2 ist herstellbar. Sie kann darüberhinaus modifiziert werden, um ihre Herstellbarkeit und Stabilität noch weiter zu erhöhen. Dies ist in Figur 5 angedeutet. Hier weisen die seitlichen Ansätze der Rippen 6 einen Krümmungsradius 9 und die Oberfläche 2 zwischen den beiden benachbarten Rippen 6 einen Krümmungsradius 10 auf. Jedoch beträgt der Krümmungsradius 9 weniger als 20 % des seitlichen Rippenabstands s, und der Krümmungsradius 10 ist mehr als doppelt so groß wie der seitliche Rippenabstand s. Krümmungen 11 an den freien Enden der Rippen 6 weisen einen Radius auf, der kleiner als 2 % des seitlichen Rippenabstands s ist. Durch diese Abrundung der Oberfläche 2 wird zwar die Herstellbarkeit der Oberfläche 2 verbessert und auch ihre Stabilität noch weiter erhöht, dennoch werden weiterhin annähernd dieselben Wandreibungsverminderungen erreicht, die in Figur 3 dargestellt sind.

**BEZUGSZEICHENLISTE**

1 - Wand
2 - Oberfläche
3 - Strömung
4 - Wirbel
5 - Strömungshauptrichtung
6 - Rippe
7 - Keilwinkel
8 - Höhe
9 - Krümmungsradius
10 - Krümmungsradius

12 - Oberfläche
16 - Rippe
17 - Keilwinkel
22 - Oberfläche
26 - Rippe

s - seitlicher Rippenabstand
$s^+$ - normierter seitlicher Rippenabstand
tau - Wandschubspannung
$tau_0$ - Wandschubspannung einer glatten Referenzoberfläche
rho - Dichte des Fluids
ny - kinematische Zähigkeit des Fluids

**Patentansprüche**

1. Von einer eine Strömungshauptrichtung aufweisenden Strömung turbulent überstrombare Wand mit einer Oberfläche, die in der Strömungshauptrichtung ausgerichtete und seitlich zu der Strömungshauptrichtung beabstandete Rippen ausbildet, wobei die Höhe der Rippen 45 % bis 60 % des seitlichen Rippenabstands beträgt, und wobei die Rippen (6) keilförmig sind, **dadurch gekennzeichnet daß** der Keilwinkel (7) von 20° bis 50° ausgebildet ist und daß die Oberfläche (2) der Wand (1) zwischen zwei benachbarten Rippen (6) einen Krümmungsradius (10) von mindestens 200 % des seitlichen Rippenabstands (s) aufweist.

2. Wand nach Abnspruch 1, **dadurch gekennzeichnet, daß** der normierte seitliche Rippenabstand

$$s^+ = (s / ny) * \sqrt{(tau_0 / rho)}$$

12 bis 22 beträgt, wobei s der seitliche Rippenabstand, $tau_0$ die Wandschubspannung einer glatten Referenzoberfläche, die der gleichen Strömung ausgesetzt ist, rho die Dichte des Fluids und ny die kinematische Zähigkeit des Fluids ist.

3. Wand nach Anspruch 2, **dadurch gekennzeichnet, daß** der normierte Rippenabstand $s^+$ auf die Reisegeschwindigkeit eines die Oberfläche aufweisenden Fahr- oder Flugzeugs abgestimmt ist.

4. Wand nach einem der Ansprüche 1 bis 3, **dadurch gekennzeichnet, daß** der seitliche Rippenabstand s 0,04 bis 0,10 mm beträgt.

5. Wand nach einem der Ansprüche 1 bis 4, **dadurch gekennzeichnet, daß** ein Krümmungsradius (9) zwischen den seitlichen Ansätzen der Rippen (6) und der Oberfläche (2) zwischen den beiden benachbarten Rippen (6) maximal 20 % des seitlichen Rippenabstands s beträgt.

**Claims**

1. A wall subjectable to a turbulent flow having a main flow direction, and comprising a surface which forms projecting ribs aligned with the main flow direction and spaced apart from each other at a rib distance in a lateral direction with regard to the main flow direction; the height of the ribs being in a range of 45 % to 60 % of the lateral rib distance; and the ribs (6) being wedge-shaped, **characterized in that** the wedge angle (7) is in the range of 20° to 50°, and that the surface (2) of the wall (1) has a radius of curvature (10) of at least 200 % of the lateral rib distance (s) in the area between two adjacent ribs (6).

2. The wall according to claim 1, **characterized in that** the standardized lateral rib distance

$$s^+ = (s / ny) * \sqrt{(tau_0 / rho)}$$

is in the range of 12 to 22, s being the absolute, non-standardized lateral rib distance, $tau_0$ being a wall shear stress of a smooth reference surface which is subjected to the same flow, rho being the density of the fluid, and ny being the kinematic viscosity of the fluid.

**3.** The wall according to claim 2, **characterized in that** the standardized rib distance $s^+$ is adapted to the cruise speed of a vehicle or airplane having the surface.

**4.** The wall according to any of the claims 1 to 3, **characterized in that** the lateral rib distance is in the range of 0.04 to 0.10 mm.

**5.** The wall according to any of the claims 1 to 4, **characterized in that** a radius of curvature (9) in the area between the lateral attachment bases of the ribs (6) and the surface (2) area between two adjacent ribs (6) is at maximum 20 % of the lateral rib distance.

**Revendications**

**1.** Paroi pouvant être recouverte de manière turbulente par un courant présentant un sens principal d'écoulement et une surface qui forme des nervures orientées dans le sens principal d'écoulement et espacées latéralement par rapport à celui-ci, la hauteur des nervures représentant 45 % à 65 % de leur écartement latéral, et les nervures (6) étant en forme de coin et l'angle de coin (7) étant compris entre 20° et 50°, **caractérisée en ce que** la surface (2) de la paroi (1) présente, entre deux nervures (6) voisines, un rayon de courbure (10) d'au moins 200 % de l'écartement latéral (s) des nervures.

**2.** Paroi selon la revendication 1, **caractérisée en ce que** l'écartement latéral normalisé des nervures

$$s^+ = (s / ny) * \sqrt{(tau_0 / rho)}$$

est de 12 à 22, s étant l'écartement latéral des nervures, $tou_0$ étant la contrainte de cisaillement de la paroi d'une surface lisse de référence qui est soumise au même courant, rho étant la densité du fluide et ny la ténacité cinématique du fluide.

**3.** Paroi selon la revendication 2, **caractérisée en ce que** l'écartement normalisé $s^+$ des nervures est adaptée à la vitesse de croisière d'un véhicule ou d'un avion présentant la surface.

**4.** Paroi selon l'une des revendications 1 à 3, **caractérisée en ce que** l'écartement latéral s des nervures est compris entre 0,04 et 0,10 mm.

**5.** Paroi selon l'une des revendications 1 à 4, **caractérisée en ce qu'**un rayon de courbure (9) entre les amorces latérales des nervures (6) et la surface (2) entre les deux nervures (6) voisines représente au maximum 20 % de l'écartement latéral s des nervures.

Fig. 1

a.)

Fig. 2

b.)

Fig. 3

a.)

b.)

Fig. 4

Fig. 5